# EUROPEAN PATENT SPECIFICATION

(11) **EP 2 679 456 B1**
(45) Date of publication and mention of the grant of the patent: **06.03.2019**
(21) Application number: 12173944.5
(22) Date of filing: 27.06.2012
(51) Int. Cl.: B60S 5/06

(54) **Battery exchanging-type charging station system for electric vehicle**
Ladestationssystem mit Batterieaustausch für Elektrofahrzeug
Système de station de charge de type échange de batterie pour véhicule électrique

(43) Date of publication of application: 01.01.2014
(73) Proprietor: Kookmin University Industry Academy Cooperation Foundation, Seongbuk-gu, Seoul 136-702 (KR)
(72) Inventor: Park, Jun Seok, Seoul 121-895 (KR); Park, Jae-Hong, Seoul 137-907 (KR); Kim, Won-Kyu, Seoul 137-774 (KR); Park, Hee-Jeing, Seoul 435-010 (KR); Moon, Hee Seok, Chungcheongnam-do 336-729 (KR); Choi, Woongchul, Seoul 130-060 (KR); Jeong, Jayil, Seoul 136-720 (KR); Yu, Chi Man, Gyeonggi-do 420-709 (KR); Jung, Do Yang, Gyeonggi-do 431-756 (KR); Shin, Yong-hark, Seoul 135-966 (KR)
(74) Representative: MacDougall, Alan John Shaw

(56) References cited:
- WO-A1-2011/055687
- DE-A1-102011 108 199
- FR-A1- 2 964 352
- US-A1- 2008 277 173
- US-A1- 2008 294 283
- US-A1- 2011 223 459

## Description

### BACKGROUND

### Field of the Invention

Embodiments of the inventive concept relate to a battery exchanging type charging station system for an electric vehicle and in particular, to a battery exchanging type charging station system for an electric vehicle that can lead the way to proliferation and activation of electric vehicles and promote national interests through a variety of related industrial developments and securement of international competitiveness by building a charging infrastructure in which a battery of an electric vehicle can be exchanged quickly and accurately as well as safely and can be charged easily at any time and in any place based on robotic technology.

### Description of Related Art

A vehicle, which is essential to human life and socioeconomic activities, is a moving means that moves using fossil energy such as oil. However, fossil energy is a finite resource and is thus becoming depleted over time and the price is constantly rising.

In particular, fossil energy emits various exhaust gases that pollute the environment in the process of use and a large quantity of carbon dioxide that is a main contributing factor to global warming. Thus, in order to reduce carbon dioxide emissions, a variety of research and development activities are being performed throughout all industries in various countries of the world. As an alternative, electric vehicles which move using electricity as an energy source have been developed.

Electric vehicles that have been developed include a pure electric vehicle (battery powered electric vehicle), a hybrid electric vehicle with an electric motor and an engine, a fuel cell electric vehicle, etc. In addition, in order to expand the vitalization and dissemination of electric vehicles, a charge infrastructure by which charging can be easily performed at any time and any place is essential, and thus a variety of research thereon is underway.

However, since electric vehicles use batteries charged in a plug-in manner, unlike a vehicle that uses oil (gasoline, diesel, etc.) or natural gas, the long charging time is inconvenient for drivers and removes any economic efficiency for companies operating charging facilities.

In order to solve the above problems, in recent years, charging technology including a method of precharging a battery and exchanging the fully charged battery instead of charging of a battery in an electric vehicle directly (hereinafter referred to as a "battery replacing method") has been proposed.

Such a battery replacement method has an advantage in that when a driver in need of charging visits a battery charge station, the driver can conveniently replace his or her pre-used with a precharged battery and mount the precharged battery.

However, when a consumer visits a charging station in order to replace a battery, the battery mounted in an electric vehicle should be separated, removed, and remounted after a battery that matches a type of the electric vehicle or a type of the battery that is already mounted is found. Thus, there is a problem in that a lot of time is consumed. In addition, a professional worker who can replace a battery is required in order to replace the battery. Thus, there are problems in that replacement cost, which customers end up bearing, may be increased.

DE 10 2011 108199 discloses a battery exchange device for electrical refueling a vehicle, comprising a linear lifting unit, which automatically replaces the electric fueling of the vehicle.

### SUMMARY

Embodiments of the inventive concept provide a battery exchanging type charging station system for an electric vehicle that can lead the way to proliferation and activation of electric vehicles and promote national interests through a variety of related industrial developments and securement of international competitiveness by building a charging infrastructure in which a battery of an electric vehicle can be exchanged quickly and accurately as well as safely and can be charged easily at ay time and in any place based on robotic technology.

In accordance with one aspect of the invention, there is a battery exchanging type charging station system for an electric vehicle, comprising: a charging type battery installed on a battery mounting module of the electric vehicle; a charging station body formed with a structure in which the electric vehicle freely enters and exits and including a battery loading unit for receiving the battery; a battery replacing robot mounted in the charging station body to perform a battery replacement operation; and a charging station control unit to control the battery replacing robot such that the battery replacement operation is performed by controlling the battery replacing robot; wherein the charging station body is configured to include a vertical body extending in a vertical direction, and a horizontal body extending in a horizontal direction from a top portion of the vertical body such that the electric vehicle can pass thereunder, and a bottom of the horizontal body is provided with at least one outlet for taking the battery out.

### BRIEF DESCRIPTION OF THE DRAWINGS

The foregoing and other features and advantages of the inventive concepts will be apparent from the more particular description of preferred embodiments of the inventive concepts, as illustrated in the accompanying drawings in which like reference characters refer to the same parts throughout the different views. The drawings are not necessarily to scale, emphasis instead being placed upon illustrating the principles of the inventive concepts. In the drawings:
FIG. 1 is a block diagram for explaining a battery exchanging type charging station system for an electric vehicle in accordance with an embodiment of the inventive concept;
FIG. 2 is a schematic configuration view for explaining a battery exchanging type charging station system for an electric vehicle in accordance with an embodiment of the inventive concept;
FIG. 3 is a perspective view representing an exterior structure of a battery exchanging type charging station system for an electric vehicle in accordance with an embodiment of the inventive concept;
FIG. 4 is an expanded perspective view representing a main portion of an exterior structure when exchanging a battery in the battery exchanging type charging station system for the electric vehicle in accordance with an embodiment of the inventive concept;
FIG. 5 is an expanded perspective view representing a main portion of an interior structure when exchanging a battery in the battery exchanging type charging station system for the electric vehicle in accordance with an embodiment of the inventive concept;
FIGS. 6 and 7 are perspective views for explaining a battery loading unit of a battery exchanging type charging station system for an electric vehicle in accordance with an embodiment of the inventive concept;
FIGS. 8a to 9b are diagrams for explaining structures and operations of a battery replacing robot and a battery mounting module in a battery exchanging type charging station system for an electric vehicle in accordance with an embodiment of the inventive concept; and
FIG. 10 is a block diagram illustrating a modified example of a battery exchanging type charging station system for an electric vehicle according to an embodiment of the inventive concept.

### DETAILED DESCRIPTION OF THE EMBODIMENTS

Various embodiments will now be described more fully with reference to the accompanying drawings in which some embodiments are shown. These inventive concepts may, however, be embodied in different forms and should not be construed as limited to the embodiments set forth herein. Rather, these embodiments are provided so that this disclosure is thorough and complete and fully conveys the inventive concept to those skilled in the art. In the drawings, the sizes and relative sizes of layers and regions may be exaggerated for clarity.

Hereinafter, specific embodiments of the inventive concept will be described with reference to the drawings.

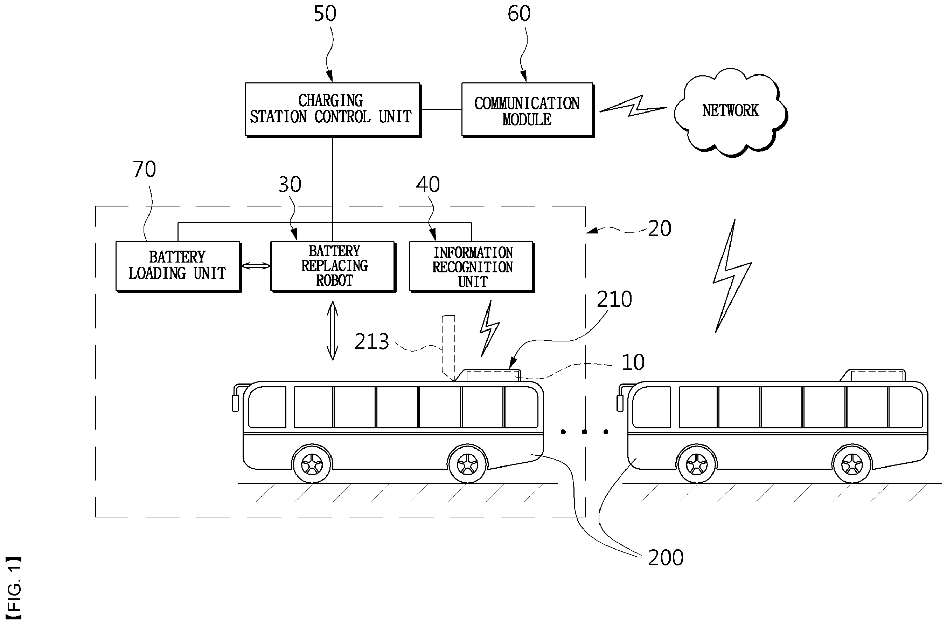

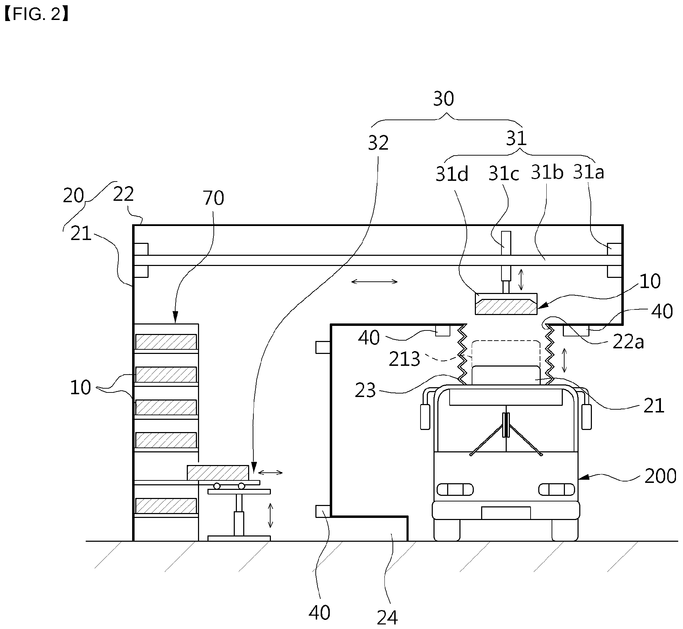

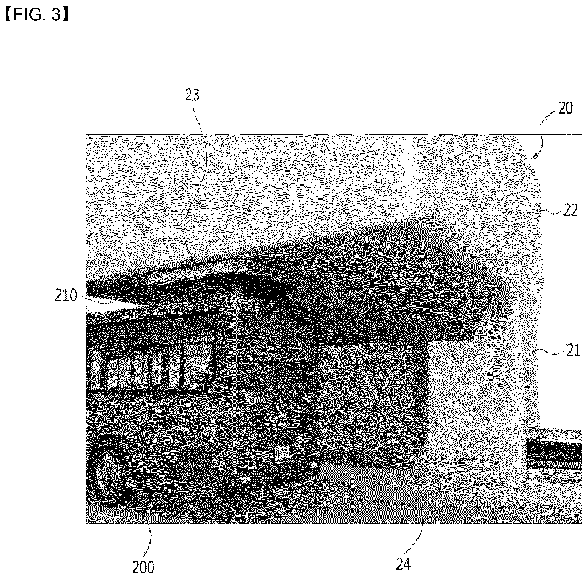

FIG. 1 is a block diagram for explaining a battery exchanging type charging station system for an electric vehicle in accordance with an embodiment of the inventive concept, FIG. 2 is a schematic configuration view for explaining a battery exchanging type charging station system for an electric vehicle in accordance with an embodiment of the inventive concept, and FIG. 3 is a perspective view representing an exterior structure of a battery exchanging type charging station system for an electric vehicle in accordance with an embodiment of the inventive concept.

Referring to FIGS. 1 to 3, the battery exchanging type charging station system for an electric vehicle 200 in accordance with an embodiment of the inventive concept may include a rechargeable battery 10 mounted on a battery mounting module 210 of the electric vehicle 200, a charging station body 20 in which a fully charged battery is stored and a battery replacing operation is performed, a battery replacing robot 30, a information recognition unit 40, and a charging station control unit 50 that allows a replacing operation of the battery 10 to be performed by controlling the battery replacing robot 30 according to information obtained from the information recognition unit 40. The battery exchanging type charging station system is implemented in a battery exchanging method by which the entire battery can be exchanged so as to replace a battery applied as an energy source of the electric vehicle quickly and accurately based on robotic technology.

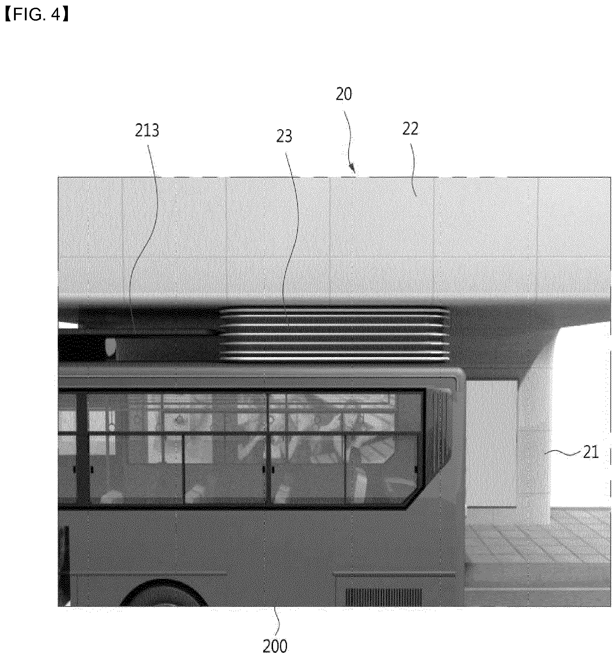

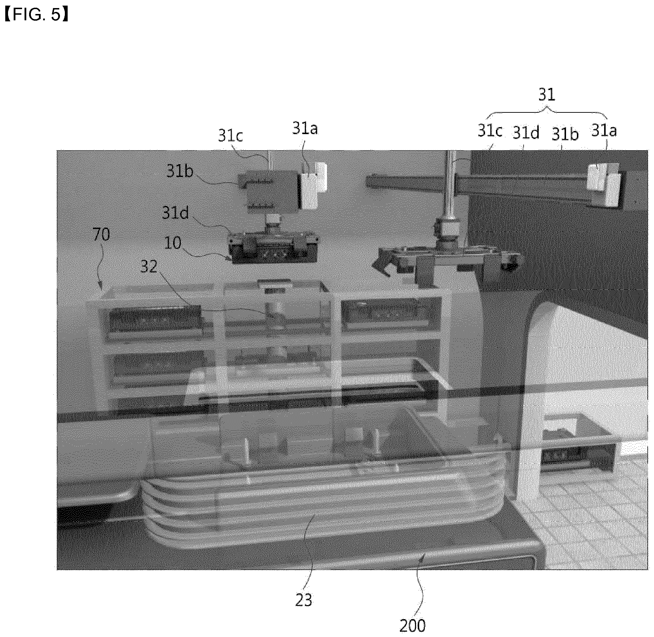

FIG. 4 is an expanded perspective view representing a main portion of an exterior structure when exchanging a battery in the battery exchanging type charging station system for the electric vehicle in accordance with an embodiment of the inventive concept; and FIG. 5 is an expanded perspective view representing a main portion of an interior structure when exchanging a battery in the battery exchanging type charging station system for the electric vehicle in accordance with an embodiment of the inventive concept.

The charging station body 20 is a structure that actually performs an operation of replacing the battery after the electric vehicle 200 enters a charging station, and is formed so as to allow the electric vehicle to freely access the battery charge station. The charging station body 20 includes the battery loading unit 70 for loading the battery.

In addition, the charging station body 20 according to the embodiment is configured to include a vertical body 21 extending in a vertical direction and coming in contact with a road, and a horizontal body 22 extending in a horizontal direction from a top portion of the vertical body 21 toward the road, as shown in FIG. 2. Thus, the battery replacement operation can be performed easily under bad weather conditions such as rain, snow and the like.

In addition, a platform 24 for passengers to use is provided between the vertical body 21 and the road, and a bottom of the horizontal body 22 is provided with at least one outlet 22a for taking the battery 10 out.

In particular, the charging station body 20 includes the protection guide 23 for sealing the battery mounting module 210 which mounts the battery when the electric vehicle 200 enters the charging station, in order to avoid ill effects according to changes in the external environment when replacing the battery 10. The protection guide 23 according to the embodiment is configured of a corrugate tube that is folded toward the battery mounting module 210 in a state in which the battery is mounted inside the charging station body 20 when the battery is being replaced and is unfolded to an original position after the battery is replaced. However, as long as the battery mounting module 210 including the battery can be effectively sealed and protected during the process of replacing the battery, the protection guide 23 may be configured to have various structures without limitation.

In addition, as shown in FIGS. 3 and 4, the protection guide 23 is configured to include a sealed membrane such as a flexible hose which is installed in the outlet 22a disposed at the bottom of the horizontal body 22, and a door driving unit (not shown) which can operate the sealed membrane in the vertical direction under the control of the charging station control unit 50.

Although not illustrated in detail, the door driving unit may include an air pressure unit having a high pressure cylinder operated by pressure air and a control valve for controlling the operation of the high pressure cylinder, or may be an electric actuator.

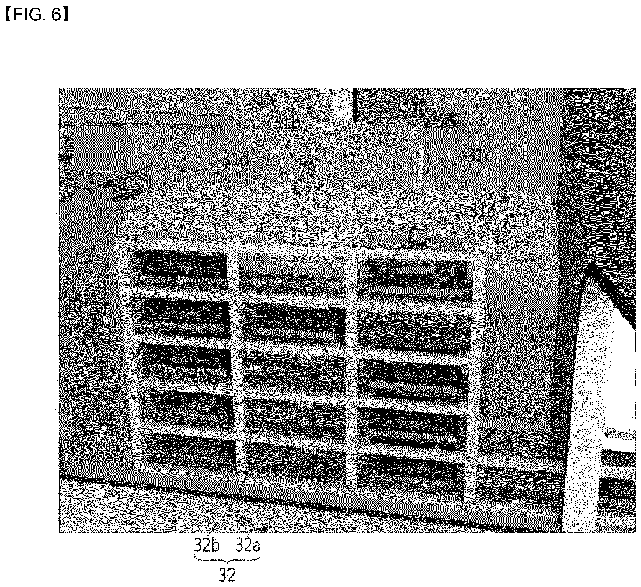

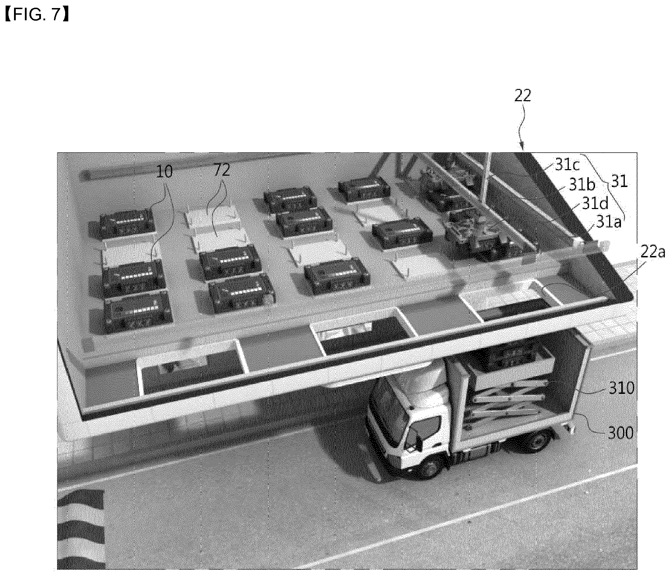

FIGS. 6 and 7 are perspective views explaining a battery loading unit of a battery exchanging type charging station system for an electric vehicle in accordance with an embodiment of the inventive concept. More concretely, FIG. 6 is a diagram illustrating a stacked storage rack type battery loading unit and FIG. 7 is a diagram illustrating a parallel storage rack type battery loading unit.

The battery loading unit 70 may be variously configured according to shapes of the charging station body 20 as a loading rack mounted in the charging station body 20 to store fully charged and discharged batteries 10 used when the battery is replaced. For example, the battery loading unit 70 may be configured to have a stacked storage rack type included in the vertical body 21 in which a plurality of batteries are arranged so as to be formed in a line at the left and right sides and the batteries are again stacked over the upper side of the line in a multi-layer structure, as shown in FIG. 6.

In addition, the battery loading unit 70 may be configured to have a parallel storage rack type in which the plurality of batteries 10 are stored in every direction of the horizontal body. In addition to this, it may be configured to have a mixed storage rack type including the stacked storage rack type and the parallel storage rack type.

In addition, a reference numeral 71 of FIG. 6 may be a moving truck type loading rack in which the batteries are moved on the battery loading unit 70 in order to effectively perform ejection and receipt processes of the battery by a battery ejecting and loading robot 32 to be described later. Also, a reference numeral 72 of FIG. 7 may be a loading rack installed on the battery loading unit 70 of the parallel storage rack type.

Meanwhile, a reference numeral 300 of FIG. 7 may be a battery supply vehicle used when the discharged batteries are charged in an outer charging apparatus and then fully charged batteries are transferred and stored, and a reference numeral 301 may be a lift for elevating the batteries.

Alternatively, in the battery exchanging type charging station system for an electric vehicle according to the embodiment, since a larger number of discharged batteries may be continuously replaced, it is preferable that the batteries be transferred using the battery supply vehicle after the discharged batteries have been fully charged. However, the charging station body 20 may include a power charging apparatus which can autonomously charge the plurality of discharged batteries.

The information recognition unit 40 may be configured to obtain information on an electric vehicle that enters the charging station body 20 and/or information on the battery mounted in the electric vehicle, that is, data of a type, size, charging state, release date, charging date or the like.

The information recognition unit 40 may be applied to a variety of techniques and devices that can be utilized in an information recognition field, such as an image sensor module in which an image of the battery is captured, and the captured image and a stored image are compared to decide a type of the battery, and an RFID technology-based reader

On the other hand, according to the inventive concept, the battery exchanging type charging station system for an electric vehicle may include a communication module 60 that performs or relays communication with the charging station control unit 50 and the electric vehicle via a wired and/or wireless communication unit. Since a communication module 60 can communicate with a transmission unit (not shown) provided in the electric vehicle, a replacing operation can be performed more rapidly by receiving information such as a battery replacement reservation, a position of the electric vehicle, a type of battery and the like, via communication with the electric vehicle and previously controlling the battery replacing robot 30 and the like under control of the charging station control unit 50.

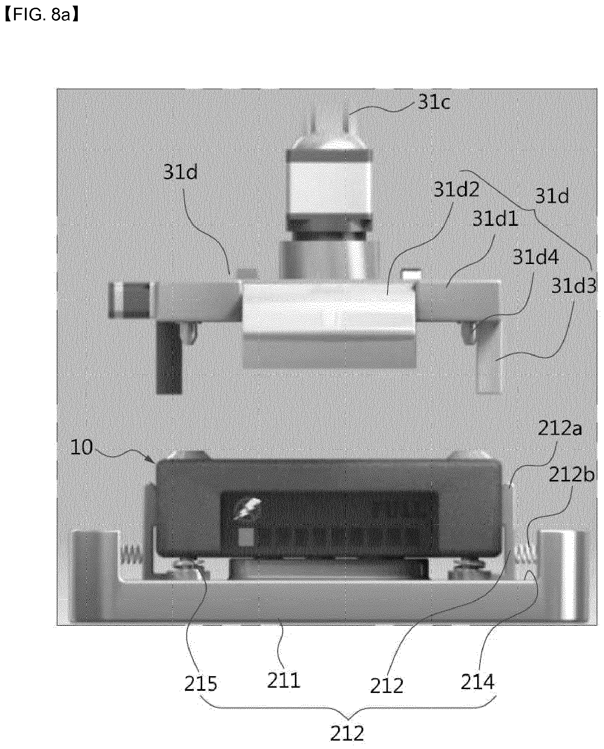

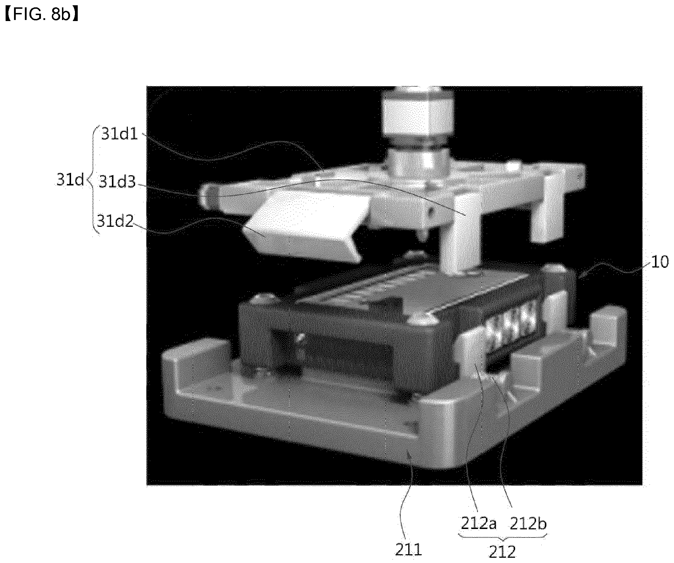

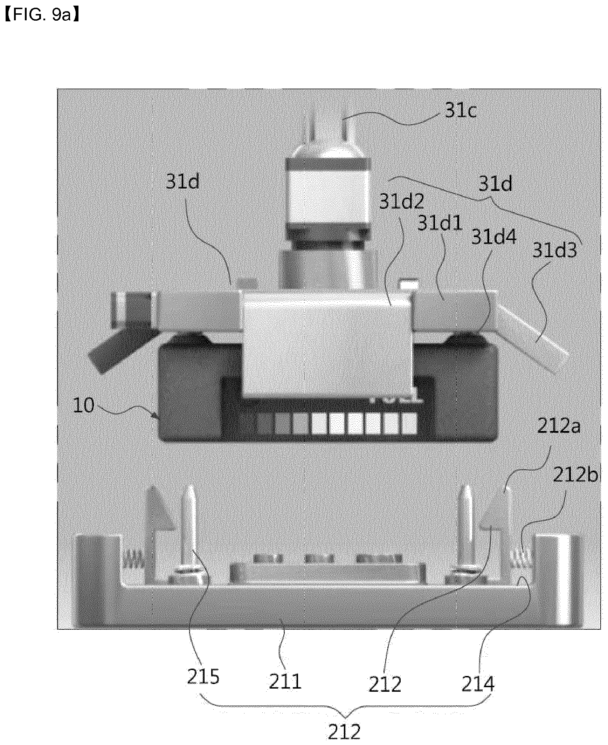

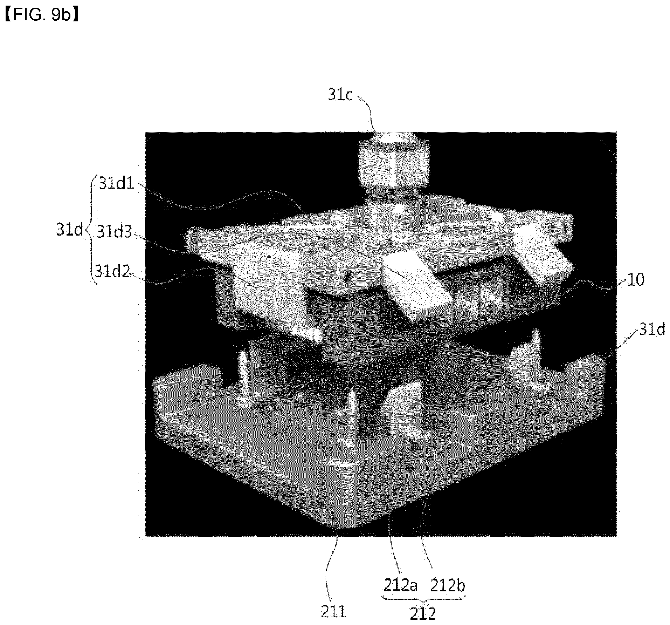

FIGS. 8a to 9b are diagrams explaining structures and operations of a battery replacing robot and a battery mounting module in a battery exchanging type charging station system for an electric vehicle in accordance with an embodiment of the inventive concept. More concretely, FIGS. 8a and 8b are a front view and a perspective view for explaining a process of removing a discharged battery, and FIGS. 9a and 9b are a front view and a perspective view for explaining a process of installing a fully charged battery.

The battery replacing robot 30 is provided in the charging station body 20 to actually perform the replacement operation of the battery. Any transport robot that can be applied in various industrial fields may be adopted as the battery replacing robot 30 without limitation, as long as the replacement operation can be performed effectively.

For example, in the embodiment, the charging station body 20 may be have an approximate "¬" shape including the vertical body 21 and the horizontal body 22. Thus, the battery replacing robot 30 may be configured to include a battery transporting and mounting robot 31 and a battery ejecting and loading robot 32 so as to be suitable for the structure of the charging station body 20.

The battery transporting and mounting robot 31 may be a robot that removes a discharged battery 10 mounted in the battery mounting module 210 of the electric vehicle and then transports a fully charged battery, which is ejected from the battery loading unit 70, and mounts on the battery mounting module 210. In addition, the battery ejecting and loading robot 32 may be a robot that ejects a fully charged battery stored in the battery loading unit 70 and then provides the fully charged battery to the battery transporting and mounting robot 31, or receives a discharged battery from the battery transporting and mounting robot 31, and then loads into the battery loading unit 70. The battery transporting and mounting robot 31 and the battery ejecting and loading robot 32 may be configured by properly disposing at least a pair of robots, depending on the size of the charging station body 20, a processing scale of the battery 10 and the like.

The battery transporting and mounting robot 31 may be configured to include a fixed rail 31a installed at the upper portion of the charging station body 20, a transporting rail 31b installed to be moved in the direction orthogonal to the fixed rail 31a, an elevating rail 31c installed to be moved along the longitudinal direction of the transporting rail 31b, or in the direction orthogonal to the transporting rail 31b, and a clamping unit 31d installed at the bottom of the elevating rod 31c to perform locking and unlocking operations in the process of replacing the battery. In addition, although the fixed rail 31a, the transporting rail 31b and the elevating rod 31c are not shown in detail in the drawings, it is obvious that driving units which generate power for the rails or apply the power to the rails may be included therein.

Meanwhile, the clamping unit 31d includes a base plate 31d1 installed at the bottom of the of the elevating rod 31, and a plurality of clamps 31d2 installed at the base plate 31d1 to perform locking and unlocking operations in order to fix or release the battery 10. In addition, the clamps 31d2 may be disposed in pairs to face each other at the edge of the base plate so as to be hooked or released to or from the battery while an angular motion is performed toward an inside or outside thereof. In addition, the clamping unit 31d may include a clamp driving device (not shown) inside the base plate 31d1 in order to drive the clamps.

In addition, the clamping unit 31d includes, at the base plate 31d1, an unclamping member 31d3 for releasing a fixed state of a discharged battery and a position decision member 31d4 for positioning the battery 10 at the base plate 31d1 when the battery mounted on the battery mounting module 210 is released.

The unclamping member 31d3 may be disposed in pairs to face each other at the portion of the base plate 31d1 corresponding to a non-mounted portion of the clamp 31d2. When the battery 10 is released, the unclamping member 31d3 is lowered in a straight state by a clamp driving device (not shown) as shown in FIGS. 8a and 8b. In addition, when a fully charged battery is installed, the unclamping member 31d3 is lowered in an outwardly titled state (an outwardly opened state) as shown in FIGS. 9a and 9b. In addition, the position decision member 31d4 performs a function by which the battery is accurately placed on the bottom of the base plate 31d while being inserted in an upper side of a guide hole formed at the battery. For reference, the position decision member 215 of the battery mounting module 210 to be described later performs a function by which the battery is accurately placed on a battery seating base 211 while being inserted in a lower side of a guide hole formed at the battery.

Meanwhile, the battery mounting module 210 is installed on a frame (not shown) of the electric vehicle, and includes a battery seating base 211 on which the battery is seated, and having a terminal unit which electrically connects the battery, a plurality of fixing units 212 which fix the battery to the battery seating base 211, and a mounting module door 213 (see FIG. 2) installed to seal a portion of the battery seating base 211 and opened when the battery is being replaced.

The mounting module door 213 may be configured to have various types in which the battery seating base 211 on which the battery is seated during an operation can be effectively sealed and be opened when the battery is being replaced to rapidly perform the replacement operation of the battery by the clamping unit 31d.

For example, the mounting module door 213 may be configured as a structure in which the protection cover 213 may be closed and opened in front and rear directions of the battery seating base 211 as shown in FIG. 4. In addition, the mounting module door 213 may be preferably configured as a structure in which the protection cover 213 may be closed and opened at the inner space surrounded by the protection guide 23 as briefly shown in FIG. 2, such that the battery is exposed to the external environment as little as possible when the battery 10 is being replaced.

In addition, the battery mounting module 210 may further include a plurality of position decision members 215 configured in the form of pins so as to be inserted guide holes formed in the battery in order for the battery 10 to be positioned and mounted on the battery seating base 211. In addition, the battery fixing unit 212 may be installed at the edge of the battery seating base 211 and configured to include a locking hook 212a for fixing the battery and an elastic member 212b for maintaining the fixed state by applying an elastic force to the locking hook 212a.

In addition, the battery 10 may be formed in the rectangular shape corresponding to the battery seating base 211. That is, a charging module including, for example, a cell inside a body having a shape corresponding to a shape of a seating groove portion 214 may be built in, and a locking groove portion 212 may be installed in order for the locking hook 212a to be seated and locked on the edge of the battery

Meanwhile, the battery ejecting and loading robot 32 according to the embodiment is configured in an elevating cylinder form that includes an elevating rod 32a and a loading plate 32b formed at the top of the elevating rod 32a as shown in FIG. 6. However, as long as the battery ejecting and loading robot 32 can eject and load easily and accurately, the structure or type of the battery ejecting and loading robot 32 is not limited.

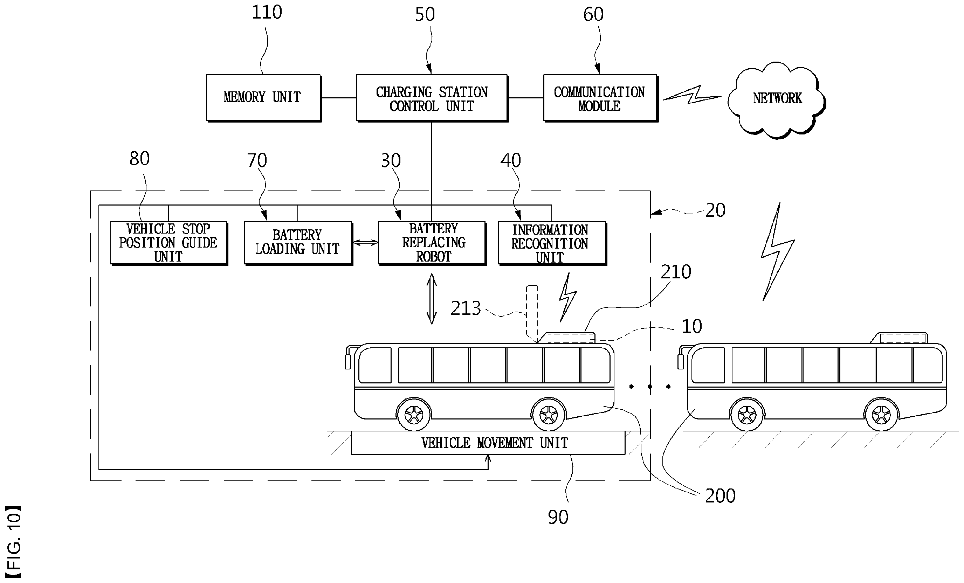

FIG. 10 is a block diagram illustrating a modified example of a battery exchanging type charging station system for an electric vehicle according to an embodiment of the inventive concept.

In accordance with the inventive concept, the battery exchanging type charging station system for an electric vehicle may further include a vehicle stop position guide unit 80 to guide a stop position of the electric vehicle 200 to enter the charging station body 20 to correspond with a battery exchanging position.

For example, the vehicle stop position guide unit 80 may include an entry detecting unit (not shown) to detect an entry position of the electric vehicle, and notification means (not shown) notifying a driver of position information such as a current position, a battery exchanging position, a moving direction, a moving distance and the like according to detected signals of the entry detecting unit under control of the charging station control unit 50.

At this time, the notification means may be configured to include at least one of a display unit such as a monitor that displays the position information through text, drawings, images and the like, a sound output unit such as a speaker that outputs voice signals so that the driver can confirm by hearing and a lamp unit that flickers with the position information so that the driver can confirm through the flicker of a lamp.

Meanwhile, the battery exchanging type charging station system for an electric vehicle according to the inventive concept may further include a vehicle movement unit 90 that moves an electric vehicle into the exchanging position when the stop position of the electric vehicle does not correspond to the exchanging position.

Such a vehicle movement unit 90 may be configured to have any structures without limitation, as long as the vehicle movement unit is installed on a road that adjoins the charging station body 20, such that it can move the vehicle to a predetermined position when the stop position of the electric vehicle does not correspond to the exchanging position. For example, the vehicle movement unit 90 may be configured by selecting any one of a belt conveyor, a chain conveyor and a roller conveyor, which can be transported in the front and rear direction.

In addition, the battery exchanging type charging station system for an electric vehicle according to the invention concept may further include a memory unit 110 that stores various information such as a use history, a charging history, a revival history, or the like. Thus, management and monitoring can be effectively performed during a period from manufacturing time of the battery to a discard time thereof using the charging station control unit.

The information stored in the memory unit 110 may be used in vehicle management and the like by providing additional service to an owner or a driver through the communication module 60 or offline after being processed by the charging station control unit 50 and the like.

Meanwhile, the battery exchanging type charging station system for an electric vehicle described above has been described based on a configuration in which the electric vehicle is configured with a typical vehicle such as a bus used in public transportation. However, all vehicles such as passenger cars, vans, trucks and the like can be applied to the charging station for an electric vehicle.

Hereinafter, an operation of the battery exchanging type charging station system for an electric vehicle according to an embodiment will be described briefly.

As shown in FIG. 1, when replacement of a battery in the charging station is reserved and a battery type to be replaced, a position of the electric vehicle and the like are input by communicating with a transmitting unit (not shown) provided in the electric vehicle and the communication module 60, the charging station control unit 50 may control the battery replacing robot 30 such that a reserved type of battery may be already prepared by processing data received from the communication module 60. Of course, this procedure may be simplified to only a reserved procedure if there is only one type of battery.

Then, when the electric vehicle enters the charging station body 20, the information recognition unit 40 may recognize information on the entering electric vehicle and apply the information to the charging station control unit 50. According to such obtained information, the charging station control unit 50 may determine whether the electric vehicle is a vehicle reserved for replacing a battery. In this case, when the vehicle is a reserved vehicle, a replacement operation may be performed by driving the battery replacing robot 30 and ejecting a reserved battery. Even if the vehicle is not a reserved vehicle, a control operation may be performed according to information obtained by the information recognition unit 40 or requirements of a driver.

Hereinafter, a replacement procedure of a battery will be described in detail. As shown in FIGS. 2 and 4, first, when an electric vehicle enters the charging station body 20 in a regular position, the battery mounting module 210 is sealed by lowering the protection guide 23 under control of the charging station control unit 50. In the replacement procedure, when a stop position of the electric vehicle is not consistent with a battery exchanging position, the replacement operation may be performed after moving the electric vehicle in the battery exchanging position using a vehicle movement unit 90.

In addition, when the battery mounting module 210 is sealed by the protection guide 23, the mounting module door 213 sealing a portion of the battery seating base 211 is opened and the discharged battery therein is exposed. At this time, a removing process of the discharged battery already mounted on the electric vehicle is first performed by the battery transporting and mounting robot 31. That is, the clamping unit 31d is lowered from a regular position of the outlet 22a and the discharged battery is locked, separated and removed from the outside according to operations of the transporting rail 31b transporting along with the fixed rail 31a and the elevating rod 31c elevating along with the transporting rail 31b. Such a removed discharged battery may be transferred from the battery transporting and mounting robot 31 to the ejecting and loading robot 32 and accepted and stored in the battery loading unit 70. At the same time, another battery transporting and mounting robot 31 for replacing with a charged battery may mount the charged battery transferred from the battery ejecting and loading robot 32 on the battery seating base 211. In addition, when the replacement operation of the charged battery is completed, as shown in FIG. 3, the battery mounting module 210 may be sealed again according to a closing operation of the mounting module door 213, and then the electric vehicle is in a state in which it can be driven again while the replacement operation of the battery is all completed when the protection guide 23 sealing the battery mounting module 210 is elevated.

As described above, in the battery exchanging type charging station system for an electric vehicle according to the inventive concept, since reservation for replacing a battery may be performed in advance and a battery can be rapidly exchanged by a robot while the electric vehicle enters in a state in which a corresponding battery (or a single type of battery) is prepared according to the reservation information, the replacement operation of the battery can be rapidly performed in a short time of 30 seconds, during which passengers can also ride in the electric vehicle if the electric vehicle is applied as a public transportation means.

In the battery exchanging type charging station system for an electric vehicle according to the inventive concept, since reservation for replacing a battery may be performed in advance and a battery can be rapidly exchanged by a robot while the electric vehicle enters in a state in which a corresponding battery (or a single type of battery) is prepared according to the reservation information, the replacement operation of the battery can be rapidly performed in a short time of 30 seconds, during which passengers can also ride in the electric vehicle if the electric vehicle is applied as a public transportation means. In addition, since all the replacement operations can be accurately handled by a robot automatically, convenience and safety can be improved.

Accordingly, since problems for a charging infrastructure that may act as major obstacles to proliferation and activation of electric vehicle can be solved, it is possible to lead the way to proliferation and activation of electric vehicles and promote national interests through a variety of related industrial developments and securement of international competitiveness.

The foregoing is illustrative of embodiments and is not to be construed as limiting thereof. Although a few embodiments have been described, those skilled in the art will readily appreciate that many modifications are possible in embodiments without materially departing from the novel teachings and advantages. Accordingly, all such modifications are intended to be included within the scope of this inventive concept as defined in the claims. In the claims, means-plus-function clauses are intended to cover the structures described herein as performing the recited function, and not only structural equivalents but also equivalent structures.

## Claims

1. A battery exchanging type charging station system for an electric vehicle (200), comprising:
a charging type battery (10) installed on a battery mounting module (210) of the electric vehicle (200);
a charging station body (20) formed with a structure in which the electric vehicle (200) freely enters and exits and including a battery loading unit (70) for receiving the battery;
a battery replacing robot (30) mounted in the charging station body (20) to perform a battery replacement operation; and
a charging station control unit (50) to control the battery replacing robot (30) such that the battery replacement operation is performed by controlling the battery replacing robot (30); the system being **characterised in that** the charging station body (20) is configured to include a vertical body (21) extending in a vertical direction and coming in contact with the road, and a horizontal body (22) extending in a horizontal direction from a top portion of the vertical body (21) toward the road such that the electric vehicle (200) can pass thereunder, and a bottom of the horizontal body (22) is provided with at least one outlet (22a) for taking the battery (10) out.

2. The battery exchanging type charging station system according to claim 1, further comprising a communication module (60) configured to receive reservation information on battery replacement from the electric vehicle (200) and provide confirmation information on whether the replacement is possible.

3. The battery exchanging type charging station system according to claim 1, wherein
the charging station body (20) includes a protection guide (23) configured to seal the battery mounting module (210) with a built-in battery when the electric vehicle (200) enters the charging station body (20), in order to avoid ill effects according to changes in an external environment when replacing the battery.

4. The battery exchanging type charging station system according to claim 3, wherein
the protection guide (23) is configured with a corrugate tube that is folded toward the battery mounting module (210) from a state in which the battery is mounted inside the charging station body (20) when the battery is being replaced and that is unfolded to an original position after the battery is replaced.

5. The battery exchanging type charging station system according to claim 3, wherein
the battery loading unit (70) is configured to have any one of a stacked storage rack type included in the vertical body (21) in which a plurality of batteries are arranged so as to be formed in a line at the left and right sides and the batteries are again stacked over the upper side of the line in a multi-layer structure, a parallel storage rack type in which the plurality of batteries are stored in every direction of the horizontal body (22), and a mixed storage rack type including the stacked storage rack type and the parallel storage rack type.

6. The battery exchanging type charging station system according to claim 1, further comprising:
a vehicle stop position guide unit (80) configured to guide a stop position of the electric vehicle (200) that enters the charging station body (20) to correspond to a battery exchanging position.

7. The battery exchanging type charging station system according to claim 3, wherein
the battery mounting module (210) includes a battery seating base (211) on which the battery is seated and having a terminal unit which electrically connects the battery, a plurality of fixing units (212) which fix the battery to the battery seating base (211), and a mounting module door (213) installed to seal a portion of the battery seating base (211) and opened when the battery is being replaced.

8. The battery exchanging type charging station system according to claim 7, wherein
the battery mounting module (210) further includes a plurality of position decision members (215) inserted in guide holes formed in the battery such that the battery is accurately placed on the battery seating base (211), and the battery fixing unit (212) is installed at the edge of the battery seating base (211) and configured to include a locking hook (212a) for fixing the battery and an elastic member (212b) for maintaining the fixed state by applying an elastic force to the locking hook (212a).

9. The battery exchanging type charging station system according to claim 7, wherein
the mounting module door (213) is configured as a structure in which the protection cover is closed and opened at the inner space surrounded by the protection guide (23) such that the battery is not exposed to the external environment when the battery is being replaced.

10. The battery exchanging type charging station system according to any one of claims 1 to 9, wherein the battery replacing robot (30) includes:
a battery transporting and mounting robot (31) that removes a discharged battery mounted in the battery mounting module (210) and then transports a fully charged battery, which is ejected from the battery loading unit (70), and mounts the fully charged battery on the battery mounting module (210); and
a battery ejecting and loading robot (32) that ejects the fully charged battery stored in the battery loading unit (70) and then provides the fully charged battery to the battery transporting and mounting robot (31), or receives the discharged battery from the battery transporting and mounting robot (31), and then loads the discharged battery into the battery loading unit (70).

11. The battery exchanging type charging station system according to claim 10, wherein
the battery transporting and mounting robot (31) includes a fixed rail (31a) installed at the upper portion of the charging station body (20), a transporting rail (31b) installed to be moved in a direction orthogonal to the fixed rail (31a), an elevating rod (31c) installed to be moved along the longitudinal direction of the transporting rail (31b), or in a direction orthogonal to the transporting rail (31b), and a clamping unit (31d) installed at the bottom of the elevating rod (31c) to perform locking and unlocking operations in the process of replacing the battery.

## Patentansprüche

1. Ladestationssystem mit Batterieaustausch für ein Elektrofahrzeug (200), das Folgendes umfasst:
eine Batterie (10) des Akkutyps, installiert auf einem Batteriemontagemodul (210) des Elektrofahrzeugs (200);
ein Ladestationsgehäuse (20), ausgebildet mit einer Konstruktion, in der das Elektrofahrzeug (200) frei ein- und ausfährt, und mit einer Batterieladeeinheit (70) zum Aufnehmen der Batterie;
einen Batteriewechselroboter (30), der in dem Ladestationsgehäuse (20) montiert ist, um einen Batteriewechsel durchzuführen; und
eine Ladestationssteuereinheit (50) zum Steuern des Batteriewechselroboters (30), so dass der Batteriewechsel durch Steuern des Batteriewechselroboters (30) durchgeführt werden kann;
wobei das System **dadurch gekennzeichnet ist, dass** das Ladestationsgehäuse (20) so konfiguriert ist, dass es ein vertikales Gehäuse (21), das sich in vertikaler Richtung erstreckt und mit der Straße in Kontakt kommt, und ein horizontales Gehäuse (22) aufweist, das sich in horizontaler Richtung von einem oberen Teil des vertikalen Gehäuses (21) in Richtung Straße erstreckt, so dass das Elektrofahrzeug (200) darunter passieren kann, und ein Boden des horizontalen Gehäuses (22) mit wenigstens einem Auslass (22a) zum Entfernen der Batterie (10) versehen ist.

2. Ladestationssystem für Batterieaustausch nach Anspruch 1, das ferner ein Kommunikationsmodul (60) umfasst, das zum Aufnehmen von Reservierungsinformationen über Batteriewechsel von dem Elektrofahrzeug (200) und zum Bereitstellen von Bestätigungsinformationen darüber konfiguriert ist, ob der Wechsel möglich ist.

3. Ladestationssystem für Batterieaustausch nach Anspruch 1, wobei
das Ladestationsgehäuse (20) eine Schutzführung (23) aufweist, konfiguriert zum Abdichten des Batteriemontagemoduls (210) mit einer eingebauten Batterie, wenn das Elektrofahrzeug (200) in das Ladestationsgehäuse (20) einfährt, um nachteilige Auswirkungen durch Änderungen einer Außenumgebung beim Wechseln der Batterie zu vermeiden.

4. Ladestationssystem für Batterieaustausch nach Anspruch 3, wobei
die Schutzführung (23) mit einem Wellrohr konfiguriert ist, das in Richtung des Batteriemontagemoduls (210) von einem Zustand gefaltet wird, in dem die Batterie beim Wechseln der Batterie innerhalb des Ladestationsgehäuses (20) montiert ist, und nach dem Wechsel der Batterie in eine ursprüngliche Position entfaltet wird.

5. Ladestationssystem für Batterieaustausch nach Anspruch 3, wobei
die Batterieladeeinheit (70) so konfiguriert ist, dass sie eines der Folgendes hat: einen im vertikalen Gehäuse (21) enthaltenen gestapelten Lagergestelltyp, in dem mehrere Batterien so angeordnet sind, dass sie in einer Reihe auf der linken und rechten Seite ausgebildet sind und die Batterien wieder über der oberen Seite der Reihe in einer mehrlagigen Konstruktion gestapelt werden, einen parallelen Lagergestelltyp, in dem die mehreren Batterien in jeder Richtung des horizontalen Gehäuses (22) gelagert sind, und einen Lagergestell-Mischtyp, der den gestapelten Lagergestelltyp und den parallelen Lagergestelltyp beinhaltet.

6. Ladestationssystem für Batterieaustausch nach Anspruch 1, das ferner Folgendes umfasst:
eine Fahrzeugstoppposition-Führungseinheit (80), konfiguriert zum Führen einer Stoppposition des Elektrofahrzeugs (200), das in das Ladestationsgehäuse (20) einfährt, die einer Batteriewechselposition entspricht.

7. Ladestationssystem für Batterieaustausch nach Anspruch 3, wobei
das Batteriemontagemodul (210) Folgendes aufweist: eine Batteriesitzbasis (211), auf der die Batterie sitzt und die eine Anschlusseinheit aufweist, die die Batterie elektrisch verbindet, mehrere Befestigungseinheiten (212), die die Batterie an der Batteriesitzbasis (211) befestigen, und eine Montagemodultür (213), die zum Abdichten eines Teils der Batteriesitzbasis (211) installiert ist und geöffnet wird, wenn die Batterie gewechselt wird.

8. Ladestationssystem für Batterieaustausch nach Anspruch 7, wobei
das Batteriemontagemodul (210) ferner mehrere Positionsbestimmungselemente (215) aufweist, die in Führungslöcher eingeführt werden, die so in der Batterie ausgebildet sind, dass die Batterie genau auf der Batteriesitzbasis (211) platziert wird, und die Batteriebefestigungseinheit (212) am Rand der Batteriesitzbasis (211) installiert und so konfiguriert ist, dass sie einen Verriegelungshaken (212a) zum Befestigen der Batterie und ein elastisches Element (212b) zum Halten des befestigten Zustands durch Aufbringen einer elastischen Kraft auf den Verriegelungshaken (212a) aufweist.

9. Ladestationssystem für Batterieaustausch nach Anspruch 7, wobei
die Montagemodultür (213) als eine Konstruktion konfiguriert ist, in der die Schutzabdeckung in dem von der Schutzführung (23) umgebenen Innenraum geschlossen und geöffnet wird, so dass die Batterie nicht der Außenumgebung ausgesetzt ist, wenn die Batterie gewechselt wird.

10. Ladestationssystem für Batterieaustausch nach einem der Ansprüche 1 bis 9, wobei der Batteriewechselroboter (30) Folgendes beinhaltet:
einen Batterietransport- und -montageroboter (31), der eine im Batteriemontagemodul (210) montierte leere Batterie entfernt und dann eine voll aufgeladene Batterie transportiert, die aus der Batterieladeeinheit (70) ausgeworfen wird, und die voll aufgeladene Batterie auf dem Batteriemontagemodul (210) montiert; und
einen Batterieauswurf- und -laderoboter (32), der die in der Batterieladeeinheit (70) gelagerte voll aufgeladene Batterie auswirft und dann die voll aufgeladene Batterie dem Batterietransport- und -montageroboter (31) bereitstellt oder die leere Batterie vom Batterietransport- und -montageroboter (31) aufnimmt und dann die leere Batterie in die Batterieladeeinheit (70) lädt.

11. Ladestationssystem für Batterieaustausch nach Anspruch 10, wobei
der Batterietransport- und -montageroboter (31) Folgendes aufweist: eine feste Schiene (31a), die im oberen Teil des Ladestationsgehäuses (20) installiert ist, eine Transportschiene (31b), installiert zum Bewegen in einer Richtung orthogonal zu der festen Schiene (31a), eine Hubstange (31c), installiert zum Bewegen entlang der Längsrichtung der Transportschiene (31b) oder in einer Richtung orthogonal zur Transportschiene (31b), und eine Klemmeinheit (31d), installiert am Boden der Hubstange (31c) zum Durchführen von Ver- und Entriegelungsvorgängen im Verlaufe des Wechselns der Batterie.

## Revendications

1. Système de station de charge du type à échange de batteries pour véhicule électrique (200), comprenant :
une batterie rechargeable (10) installée sur un module de montage de batterie (210) du véhicule électrique (200) ;
un corps de station de charge (20) formé avec une structure dans laquelle le véhicule électrique (200) entre, et en sort, librement et comportant une unité de réception de batterie (70) destinée à recevoir la batterie ;
un robot de remplacement de batterie (30) monté dans le corps de station de charge (20) pour exécuter une opération de remplacement de batterie ; et
une unité de commande de station de charge (50) pour commander le robot de remplacement de batterie (30) de telle sorte que l'opération de remplacement de batterie soit exécutée en commandant le robot de remplacement de batterie (30) ;
le système étant **caractérisé en ce que**
le corps de station de charge (20) est configuré pour inclure un corps vertical (21) s'étendant dans un sens vertical et entrant en contact avec la route, et un corps horizontal (22) s'étendant dans un sens horizontal depuis une partie de dessus du corps vertical (21) vers la route de telle sorte que le véhicule électrique (200) puisse passer en dessous, et un dessous du corps horizontal (22) est pourvue d'au moins une ouverture de sortie (22a) pour retirer la batterie (10).

2. Système de station de charge du type à échange de batteries selon la revendication 1, comprenant en outre un module de communication (60) configuré pour recevoir des informations de réservation de remplacement de batterie depuis le véhicule électrique (200) et fournir des informations de confirmation que le remplacement est possible ou non.

3. Système de station de charge du type à échange de batteries selon la revendication 1, dans lequel
le corps de station de charge (20) comporte un guide de protection (23) configuré pour sceller le module de montage de batterie (210) comportant une batterie intégrée quand le véhicule électrique (200) entre dans le corps de station de charge (20), afin d'éviter des effets nuisibles dus à des changements d'un environnement externe durant le remplacement de la batterie.

4. Système de station de charge du type à échange de batteries selon la revendication 3, dans lequel
le guide de protection (23) est configuré avec un tuyau annulé qui est plié vers le module de montage de batterie (210) d'un état dans lequel la batterie est montée à l'intérieur du corps de station de charge (20) durant le remplacement de la batterie et qui est déplié pour reprendre sa position d'origine après le remplacement de la batterie.

5. Système de station de charge du type à échange de batteries selon la revendication 3, dans lequel
l'unité de réception de batterie (70) est configurée pour présenter n'importe lequel d'un type de baie de stockage empilé inclus dans le corps vertical (21) dans lequel une pluralité de batteries est agencée de manière à former une ligne au niveau des côtés gauche et droit et les batteries sont empilées de nouveau par-dessus le côté supérieur de la ligne dans une structure multicouches, d'un type de baie de stockage parallèle dans lequel la pluralité de batteries est stockée dans tous les sens du corps horizontal (22), et d'un type de baie de stockage mixte comportant le type de baie de stockage empilé et le type de baie de stockage parallèle.

6. Système de station de charge du type à échange de batteries selon la revendication 1, comprenant en outre :
une unité de guidage de position d'arrêt de véhicule (80) configurée pour guider une position d'arrêt du véhicule électrique (200) qui entre dans le corps de station de charge (20) afin de correspondre à une position d'échange de batteries.

7. Système de station de charge du type à échange de batteries selon la revendication 3, dans lequel
le module de montage de batterie (210) comporte une base d'assise de batterie (211) sur laquelle la batterie est assise et présentant une unité de bornes qui connecte électriquement la batterie, une pluralité d'unités de fixation (212) qui fixe la batterie à la base d'assise de batterie (211), et une porte de module de montage (213) installée pour sceller une partie de la base d'assise de batterie (211) et ouverte durant le remplacement de la batterie.

8. Système de station de charge du type à échange de batteries selon la revendication 7, dans lequel
le module de montage de batterie (210) comporte en outre une pluralité d'éléments de décision de position (215) insérés dans des trous de guidage formés dans la batterie de telle sorte que la batterie soit placée de manière précise sur la base d'assise de batterie (211), et l'unité de fixation de batterie (212) est installée au bord de la base d'assise de batterie (211) et configurée pour inclure un crochet de verrouillage (212a) servant à fixer la batterie et un élément élastique (212b) servant à maintenir l'état fixe en appliquant une force élastique au crochet de verrouillage (212a).

9. Système de station de charge du type à échange de batteries selon la revendication 7, dans lequel
la porte de module de montage (213) est configurée en tant que structure dans laquelle le couvercle de protection est fermé et ouvert au niveau de l'espace interne entouré par le guide de protection (23) de telle sorte que la batterie ne soit pas exposée à l'environnement externe pendant le remplacement de la batterie.

10. Système de station de charge du type à échange de batteries selon l'une quelconque des revendications 1 à 9, dans lequel le robot de remplacement de batterie (30) comporte :
un robot de transport et de montage de batterie (31) qui retire une batterie déchargée montée dans le module de montage de batterie (210) puis transporte une batterie complètement chargée, laquelle est éjectée de l'unité de réception de batterie (70), et monte la batterie complètement chargée sur le module de montage de batterie (210) ; et
un robot d'éjection et de pose de batterie (32) qui éjecte la batterie complètement chargée stockée dans l'unité de réception de batterie (70) puis fournit la batterie complètement chargée au robot de transport et de montage de batterie (31), ou reçoit la batterie déchargée depuis le robot de transport et de montage de batterie (31), puis charge la batterie déchargée dans l'unité de réception de batterie (70).

11. Système de station de charge du type à échange de batteries selon la revendication 10, dans lequel
le robot de transport et de montage de batterie (31) comporte un rail fixe (31a) installé au niveau de la partie supérieure du corps de station de charge (20), un rail de transport (31b) installé pour être déplacé dans un sens orthogonal au rail fixe (31a), une broche d'élévation (31c) installée pour être déplacée le long du sens longitudinal du rail de transport (31b), ou dans un sens orthogonal au rail de transport (31b), et une unité de serrage (31d) installée au bas de la broche d'élévation (31c) pour exécuter des opérations de verrouillage et de déverrouillage lors du processus de remplacement de la batterie.
